# EUROPEAN PATENT APPLICATION

(11) **EP 4 175 404 A1**
(43) Date of publication of application: **03.05.2023**
(21) Application number: 21833356.5
(22) Date of filing: 25.05.2021
(51) Int. Cl.: H04W 76/27, H04W 76/38

(54) **STATE SWITCHING METHOD, INDICATION METHOD AND APPARATUS FOR CONNECTED-STATE MTCH, AND STORAGE MEDIUM, TERMINAL AND BASE STATION**

(30) Priority: 30.06.2020 CN 202010614412
(71) Applicant: Spreadtrum Communications (Shanghai) Co., Ltd., Shanghai 201203 (CN)
(72) Inventor: HAN, Lifeng, Shanghai 201203 (CN)
(74) Representative: Maiwald GmbH
(86) International application number: PCT/CN2021/095697
(87) International publication number: WO 2022/001495

(57) **Abstract**

A state switching method, an indication method and apparatus for a connected-state MTCH, and a storage medium, a terminal and a base station. The state switching method comprises: if data transmitted over a connected-state MTCH is received, starting or restarting a data inactivity timer, wherein the connected-state MTCH refers to an MTCH on which a terminal needs to remain in an RRC connected state to perform receiving; and if the data inactivity timer expires, switching the state from the RRC connected state to an idle state. By means of the solution of the present invention, a UE can perform state switching more rationally, so as to avoid affecting the reception of an MBS service.

## Description

### CROSS-REFERENCE TO RELATED APPLICATIONS

This application claims priority to Chinese Patent Application No. 202010614412.X, filed on June 30, 2020, and entitled "STATE SWITCHING METHOD AND APPARATUS, METHOD AND APPARATUS FOR INDICATING CONNECTED-STATE MTCH, STORAGE MEDIUM, TERMINAL AND BASE STATION", the entire disclosure of which is incorporated herein by reference.

### TECHNICAL FIELD

The present disclosure generally relates to communication technology field, and more particularly, to a state switching method and apparatus, a method and apparatus for indicating a connected-state Multicast Traffic Channel (MTCH), a storage medium, a terminal and a base station.

### BACKGROUND

According to discussion of recent standards, there may be a Multicast and/or Broadcast Services (MBS) traffic that must be received in a Radio Resource Control (RRC) connected-state in the future. If such an MBS traffic exists, even if there is no unicast traffic data to be transmitted, a User Equipment (UE) cannot switch from the RRC connected-state to an RRC idle state.

In a Long Term Evolution (LTE) system, reception of the MBS traffic is not affected by the RRC state of the UE, and the UE can receive the MBS traffic even in the RRC idle state, thus, the above problem will not occur. Therefore, in existing techniques, no solution is provided for that the UE must maintain in the RRC connected state during transmission of the MBS traffic. In fact, based on the existing techniques, as long as the UE does not receive unicast data for a certain period, it will switch to the RRC idle state. If the UE is performing the MBS traffic that must be in the RRC connected state at this time, it inevitably leads to a failure in the MBS traffic and accordingly affects performance of the UE.

### SUMMARY

Embodiments of the present disclosure may perform UE state switching more reasonably to avoid affecting reception of an MBS traffic.

In an embodiment of the present disclosure, a state switching method is provided, including: starting or restarting a data inactivity timer in response to receiving data transmitted by a connected-state MTCH, wherein the connected-state MTCH is an MTCH that a terminal can receive merely in an RRC connected state; and switching from the RRC connected state to an RRC idle state in response to expiration of the data inactivity timer.

Optionally, said receiving data transmitted by a connected-state MTCH includes: a Medium Access Control (MAC) entity corresponding to the connected-state MTCH receiving a MAC Service Data Unit (SDU) transmitted by the connected-state MTCH.

Optionally, said switching from the RRC connected state to an RRC idle state includes releasing an RRC connection.

Optionally, the releasing is performed due to a failure in RRC connection.

In an embodiment of the present disclosure, a state switching method is provided, including: switching from an RRC connected state to an RRC idle state in response to expiration of a data inactivity timer, and based on that there is no reception demand for data transmitted by a connected-state MTCH, wherein the connected-state MTCH is an MTCH that a terminal can receive merely in an RRC connected state.

Optionally, the reception demand for data transmitted by the connected-state MTCH includes: currently receiving the data transmitted by the connected-state MTCH, and preparing to receive the data transmitted by the connected-state MTCH.

Optionally, the data transmitted by the connected-state MTCH is periodically transmitted, and said preparing to receive the data transmitted by the connected-state MTCH includes preparing to receive the data transmitted by the connected-state MTCH in a subsequent nearest transmission period.

Optionally, the MTCH is configured to bear an MBS traffic.

Optionally, the connected-state MTCH at least includes an MTCH configured with indication of supporting Hybrid Automatic Repeat reQuest (HARQ) or configured with HARQ configuration information.

Optionally, the method further includes: receiving indication information which indicates whether a configured MTCH is the connected-state MTCH; and/or determining whether the configured MTCH is the connected-state MTCH based on reception configuration information of the configured MTCH.

In an embodiment of the present disclosure, a method for indicating a connected-state MTCH is provided, including: transmitting reception configuration information of the connected-state MTCH to indicate that a terminal can receive the connected-state MTCH merely in an RRC connected state.

Optionally, said transmitting reception configuration information of the connected-state MTCH to indicate that a terminal can receive the connected-state MTCH merely in an RRC connected state includes: using indication of supporting HARQ configured in the reception configuration information to indicate that the terminal can receive the connected-state MTCH merely in the RRC connected state.

Optionally, said transmitting reception configuration information of the connected-state MTCH to indicate that a terminal can receive the connected-state MTCH merely in an RRC connected state includes: using HARQ configuration information of MTCH configured in the reception configuration information to indicate that the terminal can receive the connected-state MTCH merely in the RRC connected state.

Optionally, said transmitting reception configuration information of the connected-state MTCH to indicate that a terminal can receive the connected-state MTCH merely in an RRC connected state includes: using reception RRC state information which is included in the reception configuration information and merely includes the RRC connected state to indicate that the terminal can receive the connected-state MTCH merely in the RRC connected state, wherein the reception RRC state information is used to indicate an RRC state required to receive data transmitted by the connected-state MTCH.

Optionally, said the reception RRC state information merely including the RRC connected state includes: using a bitmap to indicate that the reception RRC state information of the connected-state MTCH merely includes the RRC connected state.

Optionally, said transmitting reception configuration information of the connected-state MTCH includes: transmitting the reception configuration information via system information or a Multicast Control Channel (MCCH).

In an embodiment of the present disclosure, a state switching apparatus is provided, including: a starting circuitry configured to: start or restart a data inactivity timer in response to receiving data transmitted by a connected-state MTCH, wherein the connected-state MTCH is an MTCH that a terminal can receive merely in an RRC connected state; and a switching circuitry configured to switch from the RRC connected state to an RRC idle state in response to expiration of the data inactivity timer.

In an embodiment of the present disclosure, a state switching apparatus is provided, including: a switching circuitry configured to switch from an RRC connected state to an RRC idle state in response to expiration of a data inactivity timer, and based on that there is no reception demand for data transmitted by a connected-state MTCH; wherein the connected-state MTCH is an MTCH that a terminal can receive merely in the RRC connected state.

In an embodiment of the present disclosure, an apparatus for indicating a connected-state MTCH is provided, including: a transmitting circuitry configured to transmit reception configuration information of the connected-state MTCH to indicate that a terminal can receive the connected-state MTCH merely in an RRC connected state.

In an embodiment of the present disclosure, a storage medium having computer instructions stored therein is provided, wherein when the computer instructions are executed by a processor, any one of the above methods is performed.

In an embodiment of the present disclosure, a terminal including a memory and a processor is provided, wherein the memory has computer instructions stored therein, and when the processor executes the computer instructions, the above state switching method is performed.

In an embodiment of the present disclosure, a base station including a memory and a processor is provided, wherein the memory has computer instructions stored therein, and when the processor executes the computer instructions, the above method for indicating a connected-state MTCH is performed.

Embodiments of the present disclosure may provide following advantages.

For a LTE side, a state switching method is provided, including: starting or restarting a data inactivity timer in response to receiving data transmitted by a connected-state MTCH, wherein the connected-state MTCH is an MTCH that a terminal can receive merely in an RRC connected state; and switching from the RRC connected state to an RRC idle state in response to expiration of the data inactivity timer.

By adopting the solution of this embodiment, a UE may perform state switching more reasonably, so as to avoid affecting reception of an MBS traffic. Specifically, a data inactivity timer is set or reset in time by monitoring data transmission on a connected-state MTCH. Therefore, during transmission of the MBS traffic, the data inactivity timer can always be kept in a non-overtime state, so as to ensure that the LTE does not switch to an RRC idle state when the MBS traffic is not completed.

For the UE side, another state switching method is provided, including: switching from an RRC connected state to an RRC idle state in response to expiration of a data inactivity timer, and based on that there is no reception demand for data transmitted by a connected-state MTCH, wherein the connected-state MTCH is an MTCH that a terminal can receive merely in an RRC connected state.

By adopting the solution of this embodiment, a UE may perform state switching more reasonably, so as to avoid affecting reception of an MBS traffic. Specifically, when a timer expires and before performing state switching, it is determined whether there is a demand for receiving data transmitted by a connected-state MTCH. Therefore, by adding pre-judgment logic before performing the state switching, it is ensured that the UE can retain in an RRC connected state when the timer expires but there is a demand for receiving data transmitted by the connected-state MTCH.

For a network side, a method for indicating a connected-state MTCH is provided, including: transmitting reception configuration information of the connected-state MTCH to indicate that a terminal can receive the connected-state MTCH merely in an RRC connected state.

By adopting the solution of this embodiment, the network indicates whether an MTCH configured for a UE is a connected-state MTCH via reception configuration information, so that the UE determines whether it is necessary to retain in an RRC connected state during data reception on a configured MTCH. Further, the UE that has received the reception configuration information may perform the above state switching method to accurately control switching of its own state when the configured MTCH is a connected-state MTCH, so as to avoid affecting its own reception of an MBS traffic.

### BRIEF DESCRIPTION OF THE DRAWINGS

FIG 1 is a flow chart of a state switching method according to an embodiment;
FIG 2 is a flow chart of a state switching method according to an embodiment;
FIG 3 is a flow chart of a method for indicating a connected-state MTCH according to an embodiment;
FIG 4 is a structural diagram of a state switching apparatus according to an embodiment;
FIG 5 is a structural diagram of a state switching apparatus according to an embodiment; and
FIG 6 is a structural diagram of an apparatus for indicating a connected-state MTCH according to an embodiment.

### DETAILED DESCRIPTION

According to the background, in existing techniques, no solution is provided for that the UE must maintain in the RRC connected state during transmission of the MBS traffic. If the UE transmits unicast traffic data during the transmission of the MBS traffic, the UE will switch to the RRC idle state, which results in a failure in reception of the MBS traffic.

Embodiments of the present disclosure provide a state switching method, including: starting or restarting a data inactivity timer in response to receiving data transmitted by a connected-state MTCH, wherein the connected-state MTCH is an MTCH that a terminal can receive merely in an RRC connected state; and switching from the RRC connected state to an RRC idle state in response to expiration of the data inactivity timer.

By adopting the solution of this embodiment, a UE may perform state switching more reasonably, so as to avoid affecting reception of an MBS traffic. Specifically, a data inactivity timer is set or reset in time by monitoring data transmission on a connected-state MTCH. Therefore, during transmission of the MBS traffic, the data inactivity timer can always be kept in a non-overtime state, so as to ensure that the LTE does not switch to an RRC idle state when the MBS traffic is not completed.

In order to clarify the objects, characteristics and advantages of the disclosure, embodiments of present disclosure will be described in detail in conjunction with accompanying drawings.

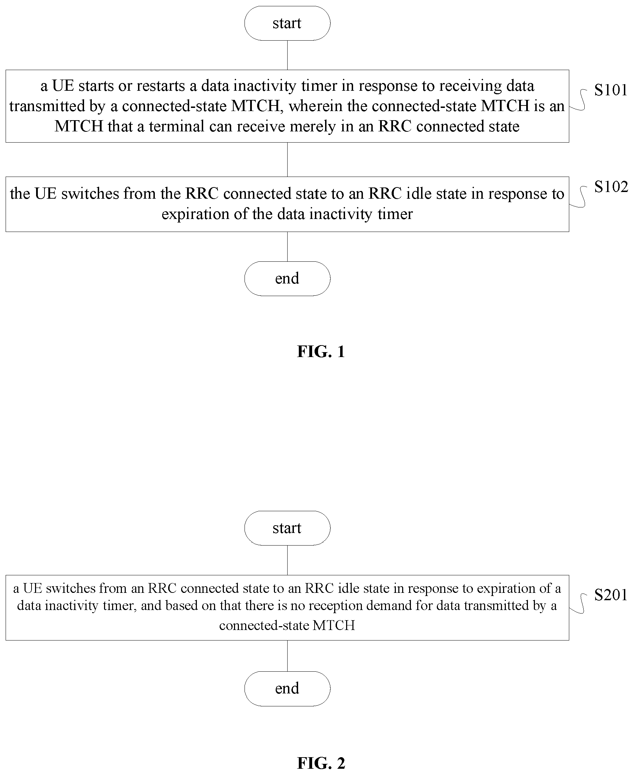

FIG 1 is a flow chart of a state switching method according to an embodiment.

The state switching method may be applied to a UE side, for example, performed by a UE on the UE side. The UE performing the method is configured with a data inactivity timer. If the data inactivity timer expires, the UE enters an RRC idle state.

The state switching method may be applied to a scenario where an MBS traffic exists, for example, the UE is receiving data in a logical channel bearing MBS traffic data. A logical channel bearing MBS traffic data for multicast or broadcast in a cell may be defined as an MTCH, and an MTCH from which the UE can receive data merely in an RRC connected state may be defined as a connected-state MTCH.

In some embodiments, the state switching method including S101 and S102 may be performed by a chip with a state switching function in the UE, or by a baseband chip in the UE.

Specifically, referring to FIG 1, the state switching method in the embodiment may include S101 and S102.

In S101, a LTE starts or restarts a data inactivity timer in response to receiving data transmitted by a connected-state MTCH, wherein the connected-state MTCH is an MTCH that a terminal can receive merely in an RRC connected state.

In S102, the UE switches from the RRC connected state to an RRC idle state in response to expiration of the data inactivity timer.

In some embodiments, the UE may be configured with one or more MAC entities, where each MAC entity is responsible for data processing of one or more logical channels.

Accordingly, S101 may include: a MAC entity corresponding to the connected-state MTCH receiving a MAC SDU transmitted by the connected-state MTCH.

In some embodiments, in addition to the connected-state MTCH, if there is data transmission on other logical channels, the start or restart of the data inactivity timer may also be triggered.

For example, the other logical channels may include: a Dedicated Traffic Channel (DTCH), a Dedicated Control Channel (DCCH), and a Common Control Channel (CCCH). These logical channels may correspond to a same MAC entity or different MAC entities.

Accordingly, S 101 may include restarting or starting the data inactivity timer if any MAC entity of the UE receives a MAC SDU from the DTCH, the DCCH, the CCCH or the connected-state MTCH.

In some embodiments, S 102 may include releasing the RRC connection. A reason for the release may include a failure in RRC connection. Therefore, precise release of the RRC connection may be realized without affecting reception of the MBS traffic.

By adopting the solution of this embodiment, the UE may perform state switching more reasonably, so as to avoid affecting reception of an MBS traffic. Specifically, a data inactivity timer is set or reset in time by monitoring data transmission on a connected-state MTCH. Therefore, during transmission of the MBS traffic, the data inactivity timer can always be kept in a non-overtime state, so as to ensure that the UE does not switch to an RRC idle state when the MBS traffic is not completed.

That is, with the embodiment as shown in FIG 1, only when the UE does not receive the MAC SDU in the connected-state MTCH within a certain period (that is, the data inactivity timer expires), the UE may switch to the RRC idle state. Therefore, the reception of the MAC SDU in the connected-state MTCH by the UE may not be affected.

FIG 2 is a flow chart of a state switching method according to an embodiment.

The state switching method may be applied to a UE side, for example, performed by a UE on the UE side. The UE performing the method is configured with a data inactivity timer. If the data inactivity timer expires, the UE enters an RRC idle state.

The state switching method may be applied to a scenario where an MBS traffic exists or may exist, for example, the UE is receiving or interested in receiving data in a logical channel bearing MBS traffic data. A logical channel bearing MBS traffic data for multicast or broadcast in a cell may be defined as an MTCH, and an MTCH from which the UE can receive data merely in an RRC connected state may be defined as a connected-state MTCH.

In some embodiments, the state switching method including S201 may be performed by a chip with a state switching function in the UE, or by a baseband chip in the UE.

Specifically, referring to FIG 2, the state switching method in the embodiment may include S201.

In S201, a UE switches from an RRC connected state to an RRC idle state in response to expiration of a data inactivity timer, and based on that there is no reception demand for data transmitted by a connected-state MTCH.

The connected-state MTCH is an MTCH that a terminal can receive merely in an RRC connected state.

In some embodiments, S201 may include: determining whether there is the reception demand for data transmitted by the connected-state MTCH in response to expiration of the data inactivity timer; and switching from the RRC connected state to the RRC idle state based on that there is no reception demand for data transmitted by the connected-state MTCH.

In some embodiments, the method may further include S203. In S203, the UE retains in the RRC connected state based on that there is the reception demand for data transmitted by the connected-state MTCH. Further, after receiving the data on the connected-state MTCH, the UE may switch from the RRC connected state to the RRC idle state.

In some embodiments, the reception demand for data transmitted by the connected-state MTCH includes: currently receiving the data transmitted by the connected-state MTCH.

In some embodiments, the reception demand for data transmitted by the connected-state MTCH includes: preparing to receive the data transmitted by the connected-state MTCH.

For example, the data transmitted by the connected-state MTCH is periodically transmitted, and said preparing to receive the data transmitted by the connected-state MTCH includes preparing to receive the data transmitted by the connected-state MTCH in a subsequent nearest transmission period although the data transmitted by the connected-state MTCH is not being currently received.

In some embodiments, the data inactivity timer may be restarted or started as any MAC entity of the LTE receives a MAC SDU from a DTCH, a DCCH or a CCCH. That is, in this embodiment, timing of LTE state switching is optimized from processing logic after the data inactivity timer is started or restarted. Although the data inactivity timer does not restart or start due to data transmission on the connected-state MTCH, when the data inactivity timer expires, the UE first determines whether there is a demand to receive data transmitted by the connected-state MTCH, so as to ensure that the UE can accurately retains in the RRC connected state when there is or will be an MBS traffic. Especially for the MBS traffic that has not yet been carried out but will be carried out in the future, the UE adopting the solution of this embodiment can actively retain in the RRC connected state, so as to avoid delaying the reception of the MBS traffic caused by re-establishing the RRC connection in the future.

In some embodiments, S202 may include releasing the RRC connection. A reason for the release may include a failure in RRC connection. Therefore, precise release of the RRC connection may be realized without affecting reception of the MBS traffic.

For example, when it is determined in S201 that there is no MBS traffic, or the MBS traffic of the UE does not need to be performed in the RRC connected state, the RRC release operation is performed.

By adopting the solution of this embodiment, the UE may perform state switching more reasonably, so as to avoid affecting reception of an MBS traffic. Specifically, when a timer expires and before performing state switching, it is determined whether there is a demand for receiving data transmitted by a connected-state MTCH. Therefore, by adding pre-judgment logic before performing the state switching, it is ensured that the UE can retain in an RRC connected state when the timer expires but there is a demand for receiving data transmitted by the connected-state MTCH.

That is, with the embodiment as shown in FIG 2, if the data inactivity timer expires and the UE is not interested in receiving or is not receiving the data of the connected-state MTCH, the UE in the RRC connected-state may switch to the RRC idle state. In this manner, it is ensured that the UE can still successfully receive the data of the connected-state MTCH when there is no data in other logical channels.

In a common embodiment of the methods as shown in FIG 1 and FIG 2, the MTCH may be used to bear the MBS traffic. Further, the connected-state MTCH may be used to bear the MBS traffic that requires the UE to receive data in the RRC connected state.

In a common embodiment of the methods as shown in FIG 1 and FIG 2, the connected-state MTCH may at least include an MTCH configured with indication of supporting HARQ or configured with HARQ configuration information.

For example, downlink data of the connected-state MTCH requires the UE to perform HARQ feedback, thus, the UE must receive the data transmitted by the MTCH in the RRC connected state. In this case, the MTCH may be called a connected-state MTCH.

For another example, the downlink data of the connected-state MTCH requires the UE to report other feedback information, which also makes the LTE to retain in the RRC connected state. For example, the UE needs to report channel state information to the base station in the RRC connected state.

In a common embodiment of the methods as shown in FIG 1 and FIG 2, the method further includes: receiving indication information which indicates whether a configured MTCH is the connected-state MTCH.

For example, the indication information may be specific or common signaling.

For another example, the indication information may be included in reception configuration information which indicates information about the MTCH configured by a base station to the LTE. For example, the indication information may include RRC state information which indicates an RRC state of the UE receiving the MTCH. The RRC state of the UE includes an RRC idle state (abbreviated as idle state), an RRC inactive state and an RRC connected state. The reception RRC state information of the connected-state MTCH merely includes the RRC connected state.

Further, the method may further include determining whether the configured MTCH is the connected-state MTCH based on reception configuration information of the configured MTCH. For example, if the reception configuration information of the configured MTCH merely includes the RRC connected state, the configured MTCH is regarded as the connected-state MTCH.

The base station and the UE may not exchange additional indication information, and the reception configuration information does not add additional fields. The UE may determine whether the MTCH configured by the base station supports HARQ or whether there is HARQ configuration information according to the reception configuration information. Specifically, the reception configuration information of the MTCH includes indication of whether HARQ is supported, or HARQ configuration information of the MTCH. For example, the HARQ configuration information may include HARQ feedback parameters or configuration of feedback resources, so that it is determined whether the reception RRC state information of the MTCH merely includes the RRC connected state, which may save signaling overhead.

For example, if the received MTCH configuration information indicates that the MTCH configured by the base station for the UE supports HARQ, it may be determined that the MTCH is a connected-state MTCH.

If the received MTCH configuration information includes the HARQ configuration information of the MTCH, it may be determined that the MTCH is a connected-state MTCH.

Further, there may be a one-to-one correspondence between the reception configuration information and the MTCH.

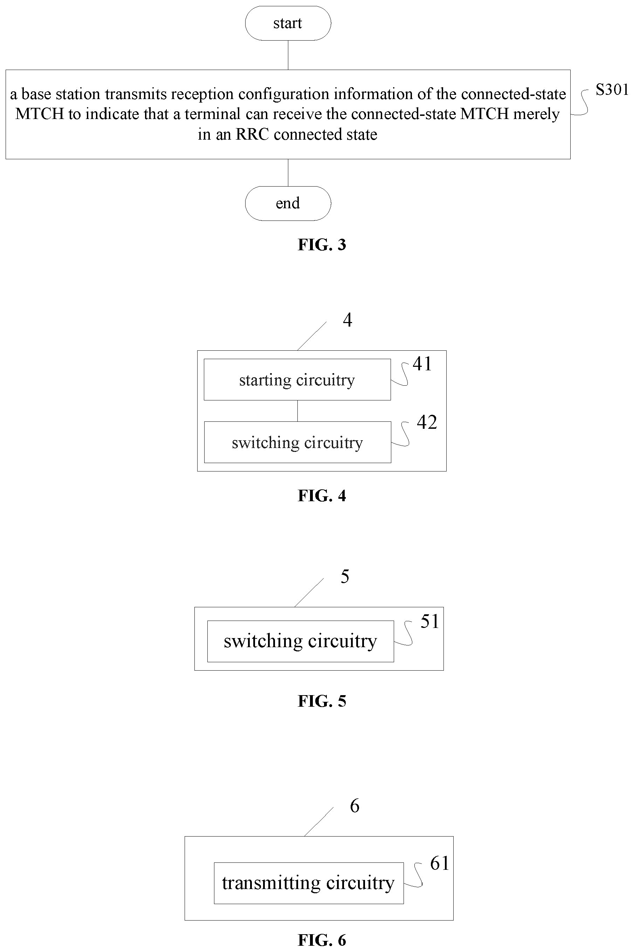

FIG 3 is a flow chart of a method for indicating a connected-state MTCH according to an embodiment.

The method may be performed by a network side, such as by a base station on the network side. Cells maintained by the base station support an MBS traffic. Among the cells supporting the MBS traffic, there may be an MTCH that requires a LTE to retain in an RRC connected state for data reception. Therefore, the base station may notify the UE in advance whether an MTCH configured for the UE is a connected-state MTCH.

In some embodiments, the state switching method provided in following S301 may be performed by a chip with a state switching function in a network device, or may be performed by a baseband chip in the network device.

Specifically, referring to FIG 3, the method in this embodiment may include S301.

In S301, a base station transmits reception configuration information of the connected-state MTCH to indicate that a terminal can receive the connected-state MTCH merely in an RRC connected state.

In some embodiments, before S301, the method may further include: for each configured MTCH, determining whether the MTCH is a connected-state MTCH. If it is determined to be the connected-state MTCH, corresponding reception configuration information may be generated for the MTCH, and S301 is performed to transmit the reception configuration information to the UE.

In some embodiments, S301 may be performed for all MTCHs, such as traversing all MTCHs in configured cells to determine whether each MTCH is a connected-state MTCH.

In some embodiments, S301 may include: using HARQ configuration information configured in the reception configuration information to indicate that the terminal can receive the connected-state MTCH merely in the RRC connected state.

In some embodiments, S301 may include: using indication of supporting HARQ configured in the reception configuration information to indicate that the terminal can receive the connected-state MTCH merely in the RRC connected state.

For example, when the reception configuration information is configured with indication of supporting HARQ or configured with HARQ configuration information, it may implicitly indicate that the MTCH is a connected-state MTCH. Accordingly, for the LTE that has received the reception configuration information, when it is found that the MTCH configured this time includes the indication of supporting HARQ or the HARQ configuration information, it may determine that the MTCH is a connected-state MTCH, and during reception of data transmitted by the MTCH, the UE needs to retain in the RRC connected state.

In some embodiments, S301 may include: using reception RRC state information which is included in the reception configuration information and merely includes the RRC connected state to indicate that the terminal can receive the connected-state MTCH merely in the RRC connected state, wherein the reception RRC state information is used to indicate an RRC state required to receive data transmitted by the connected-state MTCH.

In some embodiments, the base station uses a bitmap to indicate that the reception RRC state information of the connected-state MTCH merely includes the RRC connected state. That is, the base station may use the bitmap to indicate whether the reception RRC state information of the connected-state MTCH merely includes the RRC connected state.

For example, the base station may transmit reception configuration information of MTCH1, MTCH2, MTCH3, MTCH4, and MTCH5, and a 5-bit string may be used to indicate whether the RRC state information of the five MTCHs merely includes the RRC connected state.

Assuming that a bit at a certain position is 1, it indicates that the reception RRC state information corresponding to the MTCH merely includes the RRC connected state. Accordingly, if a string of the reception configuration information is 11101, it indicates that the reception RRC state information of MTCH1, MTCH2, MTCH3 and MTCH5 merely includes the RRC connected state, and the reception RRC state information of MTCH4 does not merely include the RRC connected state.

In some embodiments, S301 may include: transmitting the reception configuration information of the connected-state MTCH via system information or an MCCH.

For example, the base station may indicate the reception RRC state information of each MTCH in the system information or the MCCH, where the MCCH is a control channel indicating the reception configuration information such as a transmission cycle of the MTCH.

By adopting the solution of this embodiment, the network indicates whether an MTCH configured for a UE is a connected-state MTCH via reception configuration information, so that the UE determines whether it is necessary to retain in an RRC connected state during data reception on a configured MTCH. Further, the UE that has received the reception configuration information may perform the above state switching method to accurately control switching of its own state when the configured MTCH is a connected-state MTCH, so as to avoid affecting its own reception of an MBS traffic.

That is, the network side indicates the reception RRC state information of MTCH, so that the UE may receive data of the MTCH in a proper RRC state, thereby realizing an MBS traffic better.

FIG 4 is a structural diagram of a state switching apparatus according to an embodiment. Those skilled in the art could understand that the state switching apparatus 4 may be applied to perform the method as shown in FIG 1.

Referring to FIG 4, the state switching apparatus 4 may include: a starting circuitry 41 configured to: start or restart a data inactivity timer in response to receiving data transmitted by a connected-state MTCH, wherein the connected-state MTCH is an MTCH that a terminal can receive merely in an RRC connected state; and a switching circuitry 42 configured to switch from the RRC connected state to an RRC idle state in response to expiration of the data inactivity timer.

Details of working principles and working modes of the state switching apparatus 4 may be referred to relevant description of FIG 1, and are not repeated here.

In some embodiments, the state switching apparatus 4 may correspond to a chip with a state switching function in a UE, or to a chip with a data processing function, such as a System-On-Chip (SOC) or a baseband chip, or to a chip module including a chip with a state switching function in the UE, or to a chip module including a chip with a data processing function, or to the UE.

FIG 5 is a structural diagram of a state switching apparatus according to an embodiment. Those skilled in the art could understand that the state switching apparatus 5 may be applied to perform the method as shown in FIG 2.

Referring to FIG 5, the state switching apparatus 5 may include: a switching circuitry 51 configured to switch from an RRC connected state to an RRC idle state in response to expiration of a data inactivity timer, and based on that there is no reception demand for data transmitted by a connected-state MTCH, wherein the connected-state MTCH is an MTCH that a terminal can receive merely in the RRC connected state.

Details of working principles and working modes of the state switching apparatus 5 may be referred to relevant description of FIG 2, and are not repeated here.

In some embodiments, the state switching apparatus 5 may correspond to a chip with a state switching function in a UE, or to a chip with a data processing function, such as an SOC or a baseband chip, or to a chip module including a chip with a state switching function in the UE, or to a chip module including a chip with a data processing function, or to the UE.

FIG 6 is a structural diagram of an apparatus for indicating a connected-state MTCH according to an embodiment. Those skilled in the art could understand that the apparatus 6 for indicating the connected-state MTCH may be applied to perform the method as shown in FIG 3.

Referring to FIG 6, the apparatus 6 for indicating the connected-state MTCH may include: a transmitting circuitry 61 configured to transmit reception configuration information of the connected-state MTCH to indicate that a terminal can receive the connected-state MTCH merely in an RRC connected state.

Details of working principles and working modes of the apparatus 6 for indicating the connected-state MTCH may be referred to relevant description of FIG 3, and are not repeated here.

In some embodiments, the apparatus 6 for indicating the connected-state MTCH may correspond to a chip with a state switching function in a network device, or to a chip with a data processing function, such as an SOC or a baseband chip, or to a chip module including a chip with a state switching function in the network device, or to a chip module including a chip with a data processing function, or to the network device.

In some embodiments, each module/unit of each apparatus and product described in the above embodiments may be a software module/unit or a hardware module/unit, or may be a software module/unit in part, and a hardware module/unit in part.

For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

In an embodiment of the present disclosure, a storage medium having computer instructions stored therein is provided, wherein when the computer instructions are executed, any one of the above methods as shown in FIGS. 1 to 3 is performed. The storage medium may be a computer-readable storage medium, such as a non-volatile memory or a non-transitory memory. The storage medium may include a ROM, a RAM, a magnetic disk or an optical disk.

In an embodiment of the present disclosure, a terminal including a memory and a processor is provided, wherein the memory has computer instructions stored therein, and when the processor executes the computer instructions, the above methods as shown in FIGS. 1 and 2 is performed. The terminal may be a UE.

In an embodiment of the present disclosure, a base station including a memory and a processor is provided, wherein the memory has computer instructions stored therein, and when the processor executes the computer instructions, the above method as shown in FIG 3 is performed. The base station may be an NR base station.

The technical solutions of the present disclosure can be applied to 5G communication systems, 4G and 3G communication systems, and various new communication systems in the future, such as 6G and 7G communication systems.

The technical solutions of the present disclosure also can be applied to different network architectures, including but not limited to a relay network architecture, a dual-link architecture, and a vehicle-to-everything architecture.

In the embodiments of the present disclosure, a core network may be an Evolved Packet Core (EPC), 5G Core Network or a new core network in future communication systems. The 5G Core Network is composed of a set of devices, implements Access and Mobility Management Function (AMF) providing functions such as mobility management function, User Plane Function (UPF) providing functions such as packet routing and forwarding and Quality of Service (QoS) management, and Session Management Function (SMF) providing functions such as session management and IP address allocation and management. EPC can be composed of MME that provides functions such as mobility management and gateway selection, Serving Gateway (S-GW) that provides functions such as data packet forwarding, and PDN Gateway (P-GW) that provides functions such as terminal address allocation and rate control.

For an MBS traffic, the core network may include several new network elements to implement functions such as packet forwarding, MBS session management, QoS management, and transmission mode switching (switching between unicast and multicast/broadcast transmission modes). Another way is that the functionality may be implemented by network elements in an existing core network.

The Base Station (BS) in the embodiments of the present disclosure may also be referred to as a base station equipment, and is an apparatus deployed in a Radio Access Network (RAN) to provide wireless communication functions. For example, an equipment that provides a base station function in a 2G network includes a Base Transceiver Station (BTS). An equipment that provides the base station function in a 3G network includes a Node B. An equipment that provides the base station function in a 4G network includes an evolved Node B (eNB). In a Wireless Local Area Network (WLAN), an equipment that provides the base station function is an Access Point (AP). An equipment that provides the base station function in 5G New Radio (NR) includes a gNB and an ng-eNB, where the gNB and the terminal use NR technology to communicate, and the ng-eNB and the terminal use Evolved Universal Terrestrial Radio Access (E-UTRA) technology to communicate. Both the gNB and the ng-eNB can be connected to a 5G core network. The base station also refers to an equipment that provides the base station function in a new communication system in the future.

The base station controller in the embodiments of the present disclosure is a device for managing base stations, such as a Base Station Controller (BSC) in a 2G network, a Radio Network Controller (RNC) in a 3G network, or a device that controls and manages a base station in a new communication system in the future.

The network side in the embodiments of the present disclosure refers to a communication network that provides communication services for terminals, including a base station of a radio access network, a BSC of a radio access network, and a device on the core network.

A terminal in the embodiments of the present disclosure may refer to various forms of LTE, access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

In the embodiments of the present disclosure, a unidirectional communication link from an access network to a terminal is defined as a downlink, data transmitted on the downlink is downlink data, and a transmission direction of the downlink data is called a downlink direction. Besides, a unidirectional communication link from a terminal to an access network is defined as an uplink, data transmitted on the uplink is uplink data, and a transmission direction of the uplink data is called an uplink direction.

It could be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wire (e.g., infrared, wireless, microwave and etc.). The computer readable storage medium may be any available medium that can be accessed by a computer or a data storage device such as a server or a data center that contains one or more sets of available media. The available medium may be a magnetic medium (e.g., floppy disk, hard disk or magnetic tape), an optical medium (e.g., DVD), or a semiconductor medium. The semiconductor medium may be a solid disk.

It should be understood that, in the various embodiments of the present disclosure, sequence numbers of the above-mentioned processes do not represent an execution sequence, and the execution sequence of each process should be determined by its function and inherent logic, which does not limit an implementation process of the embodiments of the present disclosure.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. Further, the shown or discussed mutual coupling or direct coupling or communication connection may be an indirect coupling or communication connection via some interfaces, devices or units, and may be in an electrical, mechanical or other form.

The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit.

The integrated units implemented in the form of the software functional unit may be stored in a computer readable storage medium. The software functional unit is stored in a storage medium and includes several instructions for causing a computer device (a personal computer, a server or a network device) to execute some steps of the methods in the embodiments of the present disclosure. And the storage medium may be a medium for storing program codes, such as a U disk, a removable hard disk, a ROM, a RAM, a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A state switching method, **characterized by** comprising:
starting or restarting a data inactivity timer in response to receiving data transmitted by a connected-state Multicast Traffic Channel (MTCH), wherein the connected-state MTCH is an MTCH that a terminal can receive merely in a Radio Resource Control (RRC) connected state; and
switching from the RRC connected state to an RRC idle state in response to expiration of the data inactivity timer.

2. The method according to claim 1, **characterized in that** said receiving data transmitted by a connected-state MTCH comprises:
a Medium Access Control (MAC) entity corresponding to the connected-state MTCH receiving a MAC Service Data Unit (SDU) transmitted by the connected-state MTCH.

3. The method according to claim 1, **characterized in that** said switching from the RRC connected state to an RRC idle state comprises:
releasing an RRC connection.

4. A state switching method, **characterized by** comprising:
switching from a Radio Resource Control (RRC) connected state to an RRC idle state in response to expiration of a data inactivity timer, and based on that there is no reception demand for data transmitted by a connected-state Multicast Traffic Channel (MTCH),
wherein the connected-state MTCH is an MTCH that a terminal can receive merely in an RRC connected state.

5. The method according to claim 4, **characterized in that** the reception demand for data transmitted by the connected-state MTCH comprises: currently receiving the data transmitted by the connected-state MTCH, and preparing to receive the data transmitted by the connected-state MTCH.

6. The method according to claim 5, **characterized in that** the data transmitted by the connected-state MTCH is periodically transmitted, and said preparing to receive the data transmitted by the connected-state MTCH comprises preparing to receive the data transmitted by the connected-state MTCH in a subsequent nearest transmission period.

7. The method according to any one of claims 1 to 6, **characterized in that** the MTCH is configured to bear a Multicast and/or Broadcast Services (MBS) traffic.

8. The method according to any one of claims 1 to 6, **characterized in that** the connected-state MTCH at least comprises an MTCH configured with indication of supporting Hybrid Automatic Repeat reQuest (HARQ) or configured with HARQ configuration information.

9. The method according to any one of claims 1 to 6, **characterized by** further comprising:
receiving indication information which indicates whether a configured MTCH is the connected-state MTCH; and/or
determining whether the configured MTCH is the connected-state MTCH based on reception configuration information of the configured MTCH.

10. A method for indicating a connected-state Multicast Traffic Channel (MTCH), **characterized by** comprising:
transmitting reception configuration information of the connected-state MTCH to indicate that a terminal can receive the connected-state MTCH merely in a Radio Resource Control (RRC) connected state.

11. The method according to claim 10, **characterized in that** said transmitting reception configuration information of the connected-state MTCH to indicate that a terminal can receive the connected-state MTCH merely in an RRC connected state comprises:
using indication of supporting Hybrid Automatic Repeat reQuest (HARQ) configured in the reception configuration information to indicate that the terminal can receive the connected-state MTCH merely in the RRC connected state.

12. The method according to claim 10, **characterized in that** said transmitting reception configuration information of the connected-state MTCH to indicate that a terminal can receive the connected-state MTCH merely in an RRC connected state comprises:
using HARQ configuration information of MTCH configured in the reception configuration information to indicate that the terminal can receive the connected-state MTCH merely in the RRC connected state.

13. The method according to claim 10, **characterized in that** said transmitting reception configuration information of the connected-state MTCH to indicate that a terminal can receive the connected-state MTCH merely in an RRC connected state comprises:
using reception RRC state information which is included in the reception configuration information and merely comprises the RRC connected state to indicate that the terminal can receive the connected-state MTCH merely in the RRC connected state, wherein the reception RRC state information is used to indicate an RRC state required to receive data transmitted by the connected-state MTCH.

14. The method according to claim 13, **characterized in that** said the reception RRC state information merely comprising the RRC connected state comprises:
using a bitmap to indicate that the reception RRC state information of the connected-state MTCH merely comprises the RRC connected state.

15. The method according to claim 10, **characterized in that** said transmitting reception configuration information of the connected-state MTCH comprises:
transmitting the reception configuration information via system information or a Multicast Control Channel (MCCH).

16. A state switching apparatus, **characterized by** comprising:
a starting circuitry configured to: start or restart a data inactivity timer in response to receiving data transmitted by a connected-state Multicast Traffic Channel (MTCH), wherein the connected-state MTCH is an MTCH that a terminal can receive merely in a Radio Resource Control (RRC) connected state; and
a switching circuitry configured to switch from the RRC connected state to an RRC idle state in response to expiration of the data inactivity timer.

17. A state switching apparatus, **characterized by** comprising:
a switching circuitry configured to switch from a Radio Resource Control (RRC) connected state to an RRC idle state in response to expiration of a data inactivity timer, and based on that there is no reception demand for data transmitted by a connected-state Multicast Traffic Channel (MTCH),
wherein the connected-state MTCH is an MTCH that a terminal can receive merely in the RRC connected state.

18. An apparatus for indicating a connected-state Multicast Traffic Channel (MTCH), **characterized by** comprising:
a transmitting circuitry configured to transmit reception configuration information of the connected-state MTCH to indicate that a terminal can receive the connected-state MTCH merely in a Radio Resource Control (RRC) connected state.

19. A storage medium having computer instructions stored therein, **characterized in that** when the computer instructions are executed by a processor, the method of any one of claims 1 to 15 is performed.

20. A terminal, comprising a memory and a processor, **characterized in that** the memory has computer instructions stored therein, and when the processor executes the computer instructions, the method of any one of claims 1 to 9 is performed.

21. A base station, comprising a memory and a processor, **characterized in that** the memory has computer instructions stored therein, and when the processor executes the computer instructions, the method of any one of claims 10 to 15 is performed.
